# EUROPÄISCHE PATENTSCHRIFT

(11) **EP 1 805 064 B1**
(45) Veröffentlichungstag und Bekanntmachung des Hinweises auf die Patenterteilung: **12.01.2011**
(21) Anmeldenummer: 05777893.8
(22) Anmeldetag: 15.08.2005
(51) Int. Cl.: B60R 21/01

(54) **VERFAHREN UND VORRICHTUNG ZUM ANPASSEN EINER ÜBERWACHUNGSEINRICHTUNG EINES STEUERGERÄTES FÜR EIN RÜCKHALTESYSTEM EINES KRAFTFAHRZEUGS**
METHOD AND APPARATUS FOR ADJUSTING A MONITORING DEVICE OF A CONTROL UNIT FOR A MOTOR VEHICLE RESTRAINT SYSTEM
PROCEDE ET DISPOSITIF POUR ADAPTER UN DISPOSITIF DE SURVEILLANCE D'UN APPAREIL DE COMMANDE DESTINE A UN SYSTEME DE RETENUE D'UN VEHICULE AUTOMOBILE

(30) Priorität: 21.10.2004 DE 102004051274
(43) Veröffentlichungstag der Anmeldung: 11.07.2007
(73) Patentinhaber: ROBERT BOSCH GMBH, 70442 Stuttgart (DE)
(72) Erfinder: FISLAGE, Markus, 71229 Leonberg (DE); KARNER, Ruediger, 70806 Kornwestheim (DE); JANSEN, Alexander, 70197 Stuttgart (DE); KOLB, Christophe, 70839 Gerlingen (DE)
(86) Internationale Anmeldenummer: PCT/EP2005/053999
(87) Internationale Veröffentlichungsnummer: WO 2006/045651

(56) Entgegenhaltungen:
- DE-A1- 10 057 916
- DE-A1- 10 306 707
- DE-A1- 10 307 177
- DE-A1- 19 909 403
- US-B1- 6 643 574

## Beschreibung

### STAND DER TECHNIK

Die vorliegende Erfindung betrifft ein Verfahren und eine Vorrichtung zum Anpassen einer Überwachungseinrichtung eines Steuergerätes für ein Rückhaltesystem eines Kraftfahrzeugs

Ein Rückhaltesystem eines Kraftfahrzeugs, zum Beispiel ein Airbag, wertet in einem Steuergerät Beschleunigungssignale von Sensoren bei einem Aufprall beziehungsweise Crash aus, um in geeigneter Weise eine Rückhalteeinrichtung wie beispielsweise den Airbag auszulösen. Das Steuergerät unterstützt weiterhin verschiedene Überwachungseinrichtungen, um die Gefahr von Fehlauslösungen zu verhindern. Dieses erfolgt mittels einer so genannten Plausibilisierung über einen redundanten Hardwareteil als Erkennungseinrichtung, damit eine Auslöseentscheidung nicht allein von der Software des Steuergerätes getroffen werden kann.

Dieser redundante Hardwareteil kann in unterschiedlichen Ausführungen ausgebildet sein. Die mögliche Bandbreite dabei reicht von einem einfachen Reed-Kontakt (Hamlin-Sensor), der die Auslösung des Airbags erst freigibt, wenn ein bestimmter Beschleunigungswert überschritten ist, bis zu einer komplexen Hardwarelogik, die ähnlich zu der Crasherkennung mit einem Softwarealgorithmus eine Bewertung von Sensor-Beschleunigungswerten vornimmt. Damit wird sichergestellt, dass die Auslösung nur dann freigegeben wird, wenn durch den Hardwareteil, das heißt die redundante Erkennungseinrichtung, ein Aufprall detektiert und plausibilisiert wird.

Ein weiteres Element des Sicherheitskonzepts wird von einer Überwachungseinrichtung des Programmablaufs im Mikrokontroller des Steuergerätes gebildet. Diese Überwachungseinrichtung ist als ein so genannter Watchdog bekannt. Mit dieser Überwachungseinrichtung soll ein Fehlerzustand des Mikrokontrollers möglichst früh erkannt werden, um unkontrollierte Aktionen des Steuergerätes zu verhindern. Die Hardware des Watchdogs muss von dem auf dem Mikrokontroller ablaufenden Programm regelmäßig in einem vorgebbaren festen Zeitraster bedient werden. Ist dies nicht der Fall, werden Abfangmaßnahmen eingeleitet, wie zum Beispiel ein Sperren der Airbagauslösestufen oder ein Zurücksetzen des Mikrokontrollers.

Im normalen Fahrbetrieb des Kraftfahrzeugs laufen auf dem Mikrokontroller des Steuergerätes vorwiegend so genannte Hintergrundprogramme ab. In dieser Phase benötigt der Softwarealgorithmus im Steuergerät zur Crasherkennung nur wenig Rechenzeit. Bei Auftreten eines Aufpralls und während der Dauer dieses Crashes steigt die Rechenzeit der Software im Steuergerät auf Grund der Crasherkennung und -auswertung signifikant an. Bei einer herkömmlichen Auslegung der Überwachungseinrichtung, also des Watchdogs, muss das einen Schwellwert bildende Zeitraster so eingestellt sein, dass der Watchdog auch während des Aufpralls und dessen Dauer rechtzeitig von dem auf dem Mikrokontroller ablaufenden Programm bedient werden kann, damit die Abarbeitung der Crashauswertung störungsfrei ablaufen kann.

Aus US 6,643,574 B1 ist es bekannt, in einem Datentelegramm an Zündmodule neben der Ansteuerungsentscheidung eines Mikrocontrollers auch eine Safing-Information redundant hinzuzufügen, sodass bei einem Abweichen der Ansteuerungsentscheidung unter Safing-Information bezüglich des Informationsgehalts die Zündmodule dies erkennen können. Aus DE 100 57 916 A1 ist es bekannt, dass in einem Sicherheitsschalter, der redundant zu einem Mikrocontroller Sensorsignale auswertet, auch ein Watchdog vorgesehen ist, der den Mikrocontroller überwacht.

### VORTEILE DER ERFINDUNG

Das erfindungsgemäße Verfahren und die erfindungsgemäße Vorrichtung zum Anpassen einer Überwachungseinrichtung eines Steuergerätes für ein Rückhaltesystem eines Kraftfahrzeugs ermöglichen es, ein Fehlverhalten des Mikrokontrollers im Steuergerät des Rückhaltesystems demgegenüber früher zu erkennen und gleichzeitig die Gefahr einer unerwünschten Fehlbedienung der Überwachungseinrichtung zu verhindern. Das hat den Vorteil, dass die Überwachungseinrichtung für den Crashfall optimal auf die erhöhte Rechenzeit ausgelegt werden kann und sich somit auch die Sicherheit gegen Störungen und Ausfälle erhöht.

Die Grundidee der Erfindung wird im Folgenden erläutert.

Der Kern der Erfindung ist eine Kopplung des Zeitrasters der Überwachungseinrichtung an die redundante Erkennungseinrichtung, also die Hardware-Crasherkennung. Dabei kann das Zeitraster für den Watchdog beziehungsweise die Überwachungseinrichtung selektiv an die Zeitbedingungen im normalen Fahrbetrieb und im Crashfall angepasst werden.

Ein wesentlicher Vorteil der Erfindung ist, dass die Überwachungseinrichtung für den normalen Fahrbetrieb schärfer eingestellt werden kann, das heißt, dass das den Schwellwert bildende Zeitraster einen niedrigeren Wert erhält. Dadurch wird ein Fehlverhalten des Mikrokontrollers wesentlich früher erkannt und damit mögliche unbeabsichtigte Auswirkungen sicherer verhindert als im herkömmlichen Fall.

Auf diese Weise ist es vorteilhaft ermöglicht, dass die Überwachungseinrichtung für den Crashfall und dessen Verlauf auf die damit verbundene erhöhte Rechenzeit optimal ausgelegt werden kann. Hierdurch wird auch die Sicherheit gegen ein unerwünschtes Auslösen der Überwachungseinrichtung während eines Crashfalls erhöht.

Das erfindungsgemäße Verfahren zum Anpassen einer Überwachungseinrichtung eines Steuergerätes für ein Rückhaltesystem eines Kraftfahrzeugs, mit einer redundanten Erkennungseinrichtung und einer Auslöseeinheit weist folgende Verfahrensschritte auf:
- (S1): Vorsehen eines ersten vorgebbaren Schwellwerts als ein Zeitraster für die Überwachungseinrichtung in einem ersten Betriebsbereich des Kraftfahrzeugs;
- (S2): Erkennen zumindest eines zweiten Betriebsbereichs des Kraftfahrzeugs durch die redundante Erkennungseinrichtung zu einem ersten Zeitpunkt; und
- (S3): Übergeben von Daten von der redundanten Erkennungseinrichtung an die Überwachungseinrichtung zum Anpassen der Überwachungseinrichtung durch Verwenden zumindest eines zweiten vorgebbaren Schwellwerts im zweiten Betriebsbereich des Kraftfahrzeugs.
Durch eine Kopplung mittels Übergabe von Daten von der Erkennungseinrichtung an die Überwachungseinrichtung ist es vorteilhaft möglich, die in der Erkennungseinrichtung bei einem Crashvorgang vorhandenen Daten zur Anpassung in der Überwachungseinrichtung zu verwenden. Hierbei erfolgt die Anpassung vorteilhaft durch Veränderung von Schwellwerten, die einem Maß der Rechenzeit des Steuergerätes entsprechen, wobei empirische Zahlenwerte Verwendung finden.

Es ist vorteilhaft, dass im Verfahrensschritt (S3) das Übergeben von Daten zum Anpassen der Überwachungseinrichtung im ersten Zeitpunkt gleichzeitig mit Übergeben eines Auslösesignals an die Auslöseeinheit erfolgt, da somit gleich zu Beginn eines Crashvorgangs diese Information der Überwachungseinrichtung rechtzeitig für eine frühe Anpassung vorliegt.

In einer weiteren Ausführungsform der Erfindung ist vorgesehen, dass das Anpassen der Überwachungseinrichtung stufenweise ausgeführt wird. Hierdurch wird eine vorteilhafte Anpassung an den Verlauf der tatsächlichen Rechenzeit des Mikrokontrollers des Steuergerätes erreicht.

Eine weitere bevorzugte Ausführungsform der vorliegenden Erfindung sieht vor, dass im Verfahrensschritt (S3) das Übergeben von Daten zum Anpassen der Überwachungseinrichtung per Software innerhalb eines Programmabschnitts und/oder eines Unterprogramms erfolgt. In diesem Fall ist es möglich, dass für die Anpassung der Überwachungseinrichtung schon vorher festgelegte Programmteile und/oder Unterprogramme mit festen oder auch unterschiedlichen Anpassungswerten vorliegen, die beim Übergeben der Daten von der Erkennungseinrichtung abgerufen werden, wobei dieses vorteilhaft innerhalb der Software erfolgt und somit keinen weiteren Bauraum in Anspruch nimmt.

In einer weiteren Ausführungsform erfolgt im Verfahrensschritt (S3) nach Beendigung des zweiten Betriebsbereichs in einem zweiten Zeitpunkt ein Anpassen der Überwachungseinheit durch Verwenden des ersten Schwellwerts oder eines weiteren Schwellwerts in einem dritten Betriebsbereich des Kraftfahrzeugs. Auf diese Weise kann eine breitere Anpassung an weitere Betriebsbereiche des Kraftfahrzeugs vorteilhaft erfolgen, wodurch die Einsatzmöglichkeit der Erfindung erweitert wird.

Zur Durchführung des erfindungsgemäßen Verfahrens ist eine erfindungsgemäße Vorrichtung zur Anpassung einer Überwachungseinrichtung eines Steuergerätes für ein Rückhaltesystem eines Kraftfahrzeugs, mit einer redundanten Erkennungseinrichtung und einer Auslöseeinheit, **dadurch gekennzeichnet, dass** die redundante Erkennungseinrichtung mit der Überwachungseinrichtung über eine Kopplungsverbindung gekoppelt ist. Hierbei ist es vorteilhaft, dass die Kopplungsverbindung als eine drahtgebundene Verbindungsstrecke ausgebildet ist, wodurch eine einfache Installation ermöglicht wird.

In einer weiteren Ausführungsform ist die Kopplungsvcrbindung als eine optische Verbindungsstrecke ausgebildet, was sich vorteilhaft auswirkt, wenn das Steuergerät und die mit ihm verbundenen Systeme mittels optischer Verbindungstechnik ausgeführt sind. Somit ist eine vorteilhafte Vielseitigkeit der erfindungsgemäßen Vorrichtung gegeben.

Bei einer bevorzugten Ausgestaltung ist vorgesehen, dass die Kopplungsverbindung softwaremäßig zwischen applikationsspczifischen integrierten Schaltkreisen (ASIC) der Erkennungseinrichtung und der Überwachungseinrichtung ausgebildet ist. Dieses ist besonders vorteilhaft, da dieses nur im Bereich der Software durchgeführt wird, wobei vorteilhaft Bauraum eingespart wird.

Vorteilhafte Ausgestaltungen und Weiterbildungen der Erfindung sind den Unteransprüchen und der Beschreibung unter Bezugnahme auf die Zeichnungen entnehmbar.

### ZEICHNUNGEN

Die Erfindung wird nachfolgend anhand des in den Figuren der Zeichnung angegebenen Ausführungsbeispiels näher erläutert.

Es zeigt dabei:
- FIG. 1: ein Blockschaltbild einer Ausführungsform der erfindungsgemäßen Vorrichtung;
- FIG. 2: eine schematische Darstellung eines Rechenzeitbedarfs eines Steuergerätes bei einem Crashverlauf; und
- FIG. 3: eine weitere schematische Darstellung des Rechenzeitbedarfs nach Fig. 2.

### BESCHREIBUNG DES AUSFÜHRUNGSBEISPIELS

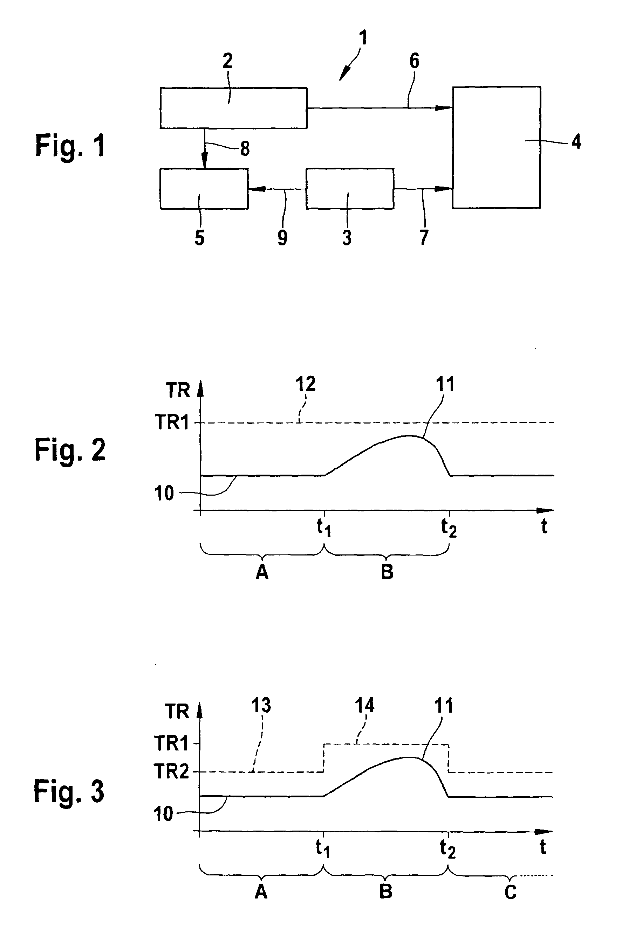

In einem Rückhaltesystem für ein Kraftfahrzeug, dessen schematischer Aufbau beispielhaft in Figur 1 dargestellt ist, ist ein Steuergerät 2 mit einer Auslöseeinheit 4 über eine Steuerverbindung 6 verbunden. Die Auslöseeinheit 4 ist weiterhin mit einer Erkennungseinrichtung 3 über eine Freigabeverbindung 7 verbunden. Weiterhin steht das Steuergerät 2 mit einer Überwachungseinrichtung 5, einem so genannten Watchdog, über eine Überwachungsverbindung in Verbindung.

Die Auslöseeinheit 4 löst ein nicht dargestelltes Rückhaltemittel, beispielsweise einen Airbag, nur dann aus, wenn ein Signal von dem Steuergerät 2 über die Steuerverbindung 6 und ein Signal von der Erkennungseinrichtung 3 über die Freigabeverbindung 7 vorliegt. Das Steuergerät 2 hat in einem solchen vorliegenden Crashfall den Aufprall über einen nicht gezeigten Sensor erkannt, und die Erkennungseinrichtung 3 hat diesen Crashfall über einen ebenfalls nicht dargestellten Sensor plausibilisiert.

Dieser oben beschriebene Aufbau und die oben beschriebene Funktion sind beide bekannt.

Im Unterschied zum herkömmlichen Aufbau ist jedoch eine Kopplungsverbindung 9 zwischen der Erkennungseinrichtung 3 und der Überwachungseinrichtung 5 vorgesehen. Diese Kopplungsverbindung 9 kann eine drahtgebundene oder eine drahtlose Verbindung sein, beispielsweise eine optische Verbindungsstrecke.

Solange die Erkennungseinrichtung 3 keinen Crashvorgang erkennt, arbeitet die Überwachungseinrichtung 5 in einem bestimmten Ablauf.

Bei einem auftretenden Crashfall, der durch die Erkennungseinrichtung 3 plausibilisiert wird, erfolgt eine Informationsübertragung von bestimmten Daten von der Erkennungseinrichtung 3 über die Kopplungsverbindung 9 zur Überwachungseinrichtung 5, wobei dieses gleichzeitig mit einer Übertragung eines Freigabesignals über die Freigabeverbindung 7 an die Auslöseeinheit stattfindet. Die bestimmten Daten von der Erkennungseinrichtung 3 werden für eine Anpassung des Ablaufs der Überwachungseinrichtung 5 verwendet.

Im Folgenden wird das erfindungsgemäße Verfahren mit Bezugnahme auf die Fig. 2 und 3 im Detail beschrieben.

In Fig. 2 ist ein Graph 10 in einem Koordinatensystem über einer Abszisse mit der Zeit t aufgetragen. Der Graph 10 stellt eine Rechenzeit des Steuergerätes 2 dar, wobei die Rechenzeit TR die Ordinate des Koordinatensystems bildet. Er verläuft in einem ersten Betriebsbereich A eines Kraftfahrzeugs ungefähr parallel zur Zeitachse t bis zu einem Zeitpunkt t1 und symbolisiert damit eine Rechenzeit des Steuergerätes 2 in diesem Betriebsbereich A, der einem normalen Fahrbetrieb des Kraftfahrzeugs entspricht.

Eine parallel zur Zeitachse t verlaufende gestrichelte Gerade stellt einen Schwellwert als Zeitraster 12 einer bestimmten Rechenzeit mit dem Ordinatenabschnitt TR1 dar, wobei ein Abstand zwischen dem Zeitraster 12 und dem Graph 10 im ersten Betriebsbereich A relativ groß ist.

Im Zeitpunkt t1 tritt ein Aufprall beziehungsweise ein Crashvorgang auf, der von dem Steuergerät 2 ermittelt und von der Erkennungseinrichtung 3 plausibilisiert wird. Der Crashvorgang wird nun als ein zweiter Betriebsbereich B des Kraftfahrzeugs bezeichnet, in welchem die Rechenzeit des Steuergerätes 2 signifikant bis zu einem Maximum 11 des Graph 10 anwächst. Zum Ende des Crashvorgangs in einem Zeitpunkt t2 nimmt die Rechenzeit wieder ab.

Das Zeitraster 12 muss bei diesem herkömmlichen Betrieb größer sein als das Maximum 11 der Rechenzeit, wie dargestellt ist. Daher ist der Abstand zwischen dem Zeitraster 12 und dem Graph 10 im ersten Betriebsbereich 10 relativ groß. In diesem Betriebsbereich A können Störungen bezichungsweise Ausfälle des Steuergerätes 2 aus diesem Grund durch die Überwachungseinrichtung 5 nicht erkannt werden.

Fig. 3 ist eine weitere Darstellung der Rechenzeit des Steuergerätes 2 nach Fig. 2 mit angepasstem Zeitraster. Erfindungsgemäß wird ein erster Schwellwert 13 als ein Zeitraster für die Überwachungseinrichtung 5 im ersten Betriebsbereich A des Kraftfahrzeugs mit dem Ordinatenabschnitt TR2 festgelegt. Der Abstand dieses ersten Schwellwertes 13 zum Graph 10 ist so gewählt, dass Ausfälle des Steuergerätes 2 viel früher erfasst werden können als bei der herkömmlichen Ausführung nach Fig. 2. Im Zeitpunkt t1 bei Beginn eines Crashvorgangs wird dieses durch die Erkennungseinrichtung 3 an die Überwachungseinrichtung 5 übermittelt, wobei ein zweiter Schwellwert 14 als ein neues Zeitraster gebildet wird. Der zweite Schwellwert 14 ist im zweiten Betriebsbereich B des Kraftfahrzeugs in einem geeigneten Abstand zur Rechenzeit, dem Graph 10, und deren Maximum 11 angeordnet, so dass das neue Zeitraster dem erhöhten Rechenzeitbedarf vorteilhaft angepasst ist. Dieser zweite Schwellwert 14 ist wie der erste Schwellwert 13 vorher festlegbar.

Somit ist ein adaptives Verhalten der Überwachungseinrichtung 5 in Abhängigkeit vom Betriebszustand des Kraftfahrzeugs beziehungsweise von einem Crashvorgang geschaffen, wodurch die Überwachung des Steuergerätes 2 durch die Überwachungseinrichtung 3 vorteilhaft anpassbar ausgebildet ist.

Die Erfindung ist nicht auf die oben beschriebenen Ausführungsbeispiele beschränkt, sondern auf vielfältige Art und Weise modifizierbar.

So ist es beispielsweise denkbar, dass nach dem Crashvorgang das Zeitraster auf den ersten Schwellwert 13 oder einen weiteren dritten Schwellwert angepasst wird.

Auch ist es möglich, dass die Anpassung des Zeitrasters auf den zweiten Schwellwert 14 stufenweise oder linear ansteigend und danach ebenfalls stufenweise oder linear abfallend ausgebildet ist, um eine noch günstigcre Anpassung zu erhalten.

Weiterhin ist für Steuergeräte 2, bei denen die Überwachungseinrichtung 5 und die Erkennungseinrichtung 3 durch applikationsspezifische integrierte Schaltungen, so genannte ASICs ausgebildet sind, möglich, die Kopplungsverbindung 9 innerhalb derselben beispielsweise per Software in einfachster Weise ohne großen Zusatzaufwand auszubilden.

### BEZUGSZEICHENLISTE

| | |
|---|---|
| 1 | Vorrichtung |
| 2 | Steuergerät |
| 3 | Erkennungseinrichtung |
| 4 | Auslöseeinheit |
| 5 | Überwachungseinrichtung |
| 6 | Steuerverbindung |
| 7 | Freigabeverbindung |
| 8 | Uberwachungsverbindung |
| 9 | Kopplungsverbindung |
| 10 | Graph |
| 11 | Maximum |
| 12 | Zeitraster |
| 13 | Erster Schwellwert |
| 14 | Zweiter Schwellwert |
| | |
| A, B, C | Betriebsbereiche eines Kraftfahrzeugs |
| S1...3 | Verfahrensschritte |
| t | Zeit |
| t1, t2 | Zeitpunkte |
| TR, TR1, TR2 | Rechenzeit(en) |

## Patentansprüche

1. Verfahren zum Anpassen einer Überwachungseinrichtung (5) eines Steuergerätes (2) für ein Rückhaltesystem eines Kraftfahrzeugs, mit einer redundanten Erkennungseinrichtung (3) und einer Auslöseeinheit (4), mit folgenden Verfahrensschritten:
Vorsehen eines ersten vorgebbaren Schwellwerts (13) als ein Zeitraster für die Überwachungseinrichtung (5) in einem ersten Betriebsbereich (A) des Kraftfahrzeugs;
Erkennen zumindest eines zweiten Betriebsbereichs (B) des Kraftfahrzeugs durch die redundante Erkennungseinrichtung (3) zu einem ersten Zeitpunkt (t1); und
Übergeben von Daten von der redundanten Erkennungseinrichtung (3) an die Überwachungseinrichtung (5) zum Anpassen der Überwachungseinrichtung (5) durch Verwenden zumindest eines zweiten vorgebbaren Schwellwerts (14) im zweiten Betriebsbereich (B) des Kraftfahrzeugs.

2. Verfahren nach Anspruch 1,
**dadurch gekennzeichnet,**
**dass** im Verfahrensschritt (S3) das Übergeben von Daten zum Anpassen der Überwachungseinrichtung (5) im ersten Zeitpunkt (t1) gleichzeitig mit Übergeben eines Auslösesignals an die Auslöseeinheit (4) erfolgt.

3. Verfahren nach Anspruch 1 oder 2,
**dadurch gekennzeichnet,**
**dass** das Anpassen der Überwachungseinrichtung (5) stufenweise ausgeführt wird.

4. Verfahren nach einem der Ansprüche 1 bis 3,
**dadurch gekennzeichnet,**
**dass** im Verfahrensschritt (S3) das Übergeben von Daten zum Anpassen der Überwachungseinrichtung (5) per Software innerhalb eines Programmabschnitts und/oder eines Unterprogramms erfolgt.

5. Verfahren nach einem der Ansprüche 1 bis 4,
**dadurch gekennzeichnet,**
**dass** im Verfahrensschritt (S3) nach Beendigung des zweiten Betriebsbereichs (B) in einem zweiten Zeitpunkt (t2) ein Anpassen der Überwachungseinheit (5) durch Verwenden des ersten Schwellwerts (13) oder eines weiteren Schwellwerts in einem dritten Betriebsbereich (C) des Kraftfahrzeugs erfolgt.

6. Verfahren nach einem der Ansprüche 1 bis 5,
**dadurch gekennzeichnet,**
**dass** der erste und der zweite Schwellwert (13, 14) jeweils ein Maß für eine Rechenzeit des Steuergerätes (2) ist.

7. Vorrichtung (1) zur Anpassung einer Überwachungseinrichtung (5) eines Steuergerätes (2) für ein Rückhaltesystem eines Kraftfahrzeugs, mit einer redundanten Erkennungseinrichtung (3) und einer Auslöseeinheit (4),
**dadurch gekennzeichnet,**
**dass** die redundante Erkennungseinrichtung (3) mit der Überwachungseinrichtung (5) über eine Kopplungsverbindung (9) derart gekoppelt ist, dass durch diese Kopplungsverbindung (9) Daten von der redundanten Erkennungseinrichtung (3) an die Überwachungseinrichtung (5) übergeben werden, wobei die Daten bei einem CrashVorgang zur Anpassung der Überwachungseinrichtung (5) verwendet werden.

8. Vorrichtung (1) nach Anspruch 7,
**dadurch gekennzeichnet,**
**dass** die Kopplungsverbindung (9) als eine drahtgebundene Verbindungsstrecke ausgebildet ist.

9. Vorrichtung (1) nach Anspruch 7,
**dadurch gekennzeichnet,**
**dass** die Kopplungsverbindung (9) als eine optische Verbindungsstrecke ausgebildet ist.

10. Vorrichtung (1) nach Anspruch 7,
**dadurch gekenntzeichnet,**
**dass** die Kopplungsverbindung (9) softwaremäßig zwischen applikationsspezifischen integrierten Schaltkreisen (ASIC) der Erkennungseinrichtung (3) und der Überwachungseinrichtung (5) ausgebildet ist.

## Claims

1. Method for adapting a monitoring device (5) of a control unit (2) for a motor vehicle restraint system, having a redundant detection device (3) and a triggering unit (4), having the following method steps:
provision of a first predefinable threshold value (13) as a time pattern for the monitoring device (5) in a first operating range (A) of the motor vehicle;
detection of at least a second operating range (B) of the motor vehicle by the redundant detection device (3) at a first point in time (t1); and
transfer of data from the redundant detection device (3) to the monitoring device (5) for the adaptation of the monitoring device (5) by using at least one second predefinable threshold value (14) in the second operating range (B) of the motor vehicle.

2. Method according to Claim 1,
**characterized**
**in that** in the method step (S3), the transfer of data for the adaptation of the monitoring device (5) takes place at the first point in time (t1) simultaneously with the transfer of a triggering signal to the triggering unit (4).

3. Method according to Claim 1 or 2,
**characterized**
**in that** the adaptation of the monitoring device (5) is carried out incrementally.

4. Method according to one of Claims 1 to 3,
**characterized**
**in that** in the method step (S3), the transfer of data for the adaptation of the monitoring device (5) takes place by means of software within a program segment and/or a subroutine.

5. The method as claimed in one of Claims 1 to 4,
**characterized**
**in that** in the method step (S3), adaptation of the monitoring unit (5) takes place by using the first threshold value (13) or a further threshold value in a third operating range (C) of the motor vehicle after the second operating range (B) ends at a second point in time (t2).

6. Method according to one of Claims 1 to 5,
**characterized**
**in that** the first and second threshold values (13, 14) are each a measure of a computing time of the control unit (2).

7. Apparatus (1) for the adaptation of a monitoring device (5) of a control unit (2) for a motor vehicle restraint system, having a redundant detection device (3) and a triggering unit (4),
**characterized**
**in that** the redundant detection device (3) is coupled to the monitoring device (5) via a coupling connection (9) in such a way that data are transferred from the redundant detection device (3) to the monitoring device (5) by means of this coupling connection (9), wherein in the event of a crash process, the data are used for the adaptation of the monitoring device (5).

8. Apparatus (1) according to Claim 7,
**characterized**
**in that** the coupling connection (9) is embodied as a wire-bound link.

9. Apparatus (1) according to Claim 7,
**characterized**
**in that** the coupling connection (9) is embodied as an optical link.

10. Apparatus (1) according to Claim 7,
**characterized**
**in that** the coupling connection (9) is embodied as software between application-specific integrated circuits (ASIC) of the detection device (3) and the monitoring device (5).

## Revendications

1. Procédé d'adaptation d'un dispositif de surveillance (5) d'un appareil de commande (2) d'un système de retenue d'un véhicule automobile, doté d'un dispositif redondant de détection (3) et d'une unité de déclenchement (4), le procédé présentant les étapes suivantes :
prévoir une première valeur de seuil (13) prédéterminée comme trame temporelle du dispositif de surveillance (5) dans une première plage de fonctionnement (A) du véhicule automobile,
faire détecter au moins une deuxième plage de fonctionnement (B) du véhicule automobile par le dispositif redondant de détection (3) à un premier instant (t1) et
transmettre des données du dispositif de détection redondante (3) au dispositif de surveillance (5) pour adapter le dispositif de surveillance (5) par recours à au moins une deuxième valeur prédéterminée (14) dans la deuxième plage de fonctionnement (B) du véhicule automobile.

2. Procédé selon la revendication 1, **caractérisé en ce que** dans l'étape de traitement (S3), la transmission de données en vue de l'adaptation du système de surveillance (5) au premier instant (t1) s'effectue en même temps que la transmission d'un signal de déclenchement à l'unité de déclenchement (4).

3. Procédé selon la revendication 1 ou 2, **caractérisé en ce que** l'adaptation du dispositif de surveillance (5) est réalisée par pas.

4. Procédé selon l'une des revendications 1 à 3, **caractérisé en ce que** dans l'étape de traitement (S3), la transmission de données en vue de l'adaptation du système de surveillance (5) s'effectue par logiciel dans une partie de programme et/ou un sous-programme.

5. Procédé selon l'une des revendications 1 à 4, **caractérisé en ce qu'**à l'étape de traitement (S3), une adaptation de l'unité de surveillance (5) par recours à la première valeur de seuil (13) ou à une autre valeur de seuil dans une troisième plage de fonctionnement (C) du véhicule automobile a lieu à un deuxième instant (t2) après la fin de la deuxième plage de fonctionnement (B).

6. Procédé selon l'une des revendications 1 à 5, **caractérisé en ce que** la première et la deuxième valeur de seuil (13, 14) sont toutes deux une mesure du temps de calcul de l'appareil de commande (2).

7. Dispositif (1) d'adaptation d'un dispositif de surveillance (5) d'un appareil de commande (2) d'un système de retenue d'un véhicule automobile, doté d'un dispositif redondant de détection (3) et d'une unité de déclenchement (4), **caractérisé en ce que** le dispositif de détection redondante (3) est accouplé au dispositif de surveillance (5) par une liaison de couplage (9), de telle sorte que cette liaison de couplage (9) permette le transfert de données du dispositif de détection redondante (3) au dispositif de surveillance (5), les données étant utilisées en cas de collision pour adapter le dispositif de surveillance (5).

8. Dispositif (1) selon la revendication 7, **caractérisé en ce que** la liaison de couplage (9) est configurée comme parcours de liaison par fil.

9. Dispositif (1) selon la revendication 7, **caractérisé en ce que** la liaison de couplage (9) est configurée comme parcours de liaison optique.

10. Dispositif (1) selon la revendication 7, **caractérisé en ce que** la liaison de couplage (9) est configurée comme logiciel entre des circuits intégrés spécifiques à l'application (ASIC) du dispositif de détection (3) et le dispositif de surveillance (5).
